# EUROPÄISCHE PATENTSCHRIFT

(11) **EP 0 802 133 B1**
(45) Veröffentlichungstag und Bekanntmachung des Hinweises auf die Patenterteilung: **16.08.2001**
(21) Anmeldenummer: 97105888.8
(22) Anmeldetag: 10.04.1997
(51) Int. Cl.: B65G 47/61

(54) **Verfahren zum Steuern einer Hängeförderanlage**
Control method for a suspended conveyer system
Procédé de commande d'un convoyeur suspendu

(30) Priorität: 20.04.1996 DE 19615773
(43) Veröffentlichungstag der Anmeldung: 22.10.1997
(73) Patentinhaber: DÜRKOPP ADLER AKTIENGESELLSCHAFT, D-33719 Bielefeld (DE)
(72) Erfinder: Blattner, Thomas, 33659 Bielefeld (DE); Sieksmeier, Dirk, 32139 Spenge (DE); Janzen, Paul, 33609 Bielefeld (DE)
(74) Vertreter: Rehmann, Klaus-Thorsten, Dipl.-Ing.

(56) Entgegenhaltungen:
- EP-A- 0 005 539
- EP-A- 0 403 869
- EP-A- 0 492 465
- DE-C- 4 326 095
- FR-A- 2 614 281
- US-A- 5 046 844

## Beschreibung

Die Erfindung betrifft eine Vorrichtung zum Vereinzeln von Förderträgern mit einer drehbar angetriebenen Gewindespindel, derer Gewindesteigung in Förderrichtung anwächst, wobei die Spindel ir mehrere Bereiche unterschiedlicher Steigung aufgeteilt ist.

Eine solche Vorrichtung ist beispielsweise aus der US 5,046,844 als Teil einer Inspektionseinrichtung für Kleidungsstücke. Die Gewindespindel ist einstellbar um Bügel unterschiedlicher Abmessungen aufnehmen zu können.

Ein Verfahren zum Steuern einer Hängeförderanlage mit einem umlaufenden Hängeförderer, der mit einer Vielzahl hintereinander versehenen Fördertaschen ausgerüstet ist, einer Eingabevorrichtung, über die an einer Übergabestelle einzelne Förderträger, insbesondere Kleiderbügel, in jeweils eine Fördertasche eingege ben werden, wobei die Eingabevorrichtung mit einer Vereinzelungsvorrichtung versehen ist, durch die einzugebenden Förderträger zueinander beabstandet werden, und einer Steuereinrichtung ist beispielsweise aus der EP 0 517 677 B1 bekannt. Die Hängeförderanlage dient dazu, auf Kleiderbügeln hängende Kleidungsstücke zu sortieren bzw. zu kommissionieren. Die Förderträger (Kleiderbügel) werden der endlos umlaufenden Hängeförderanlage in ungeordneter Reihenfolge zugeführt. Hierzu sind ein oder mehrere Übergabestellen vorgesehen, an denen eine Eingabevorrichtung angeordnet ist. Jede Fördertasche ist zur Aufnahme nur eines Förderträgers vorgesehen. Um sicherzustellen, daß auch jeweils immer nur ein Förderträger in eine Fördertasche eingegeben wird, ist die Eingabevorrichtung mit einer Vereinzelungseinrichtung versehen, durch die die einzelnen Förderträger, das heißt die Haken der Kleiderbügel, getrennt und zueinander beabstandet werden. Die Vereinzelungsvorrichtung besteht aus einer geneigt angeordneten Schiene, an der die Kleiderbügel entlangrutschen, und oberhalb der Schiene vorgesehenen Separierfingern, die in vertikaler Richtung bewegt werden können. Die Bügelhaken laufen gegen den abgesenkten Finger an und werden am Weitergleiten gehindert. Über einen Sensor wird die Anwesenheit eines Kleidungsstückes an dem letzten Separierfinger erkannt, wodurch vermieden wird, daß ein weiterer Förderträger an diese Vereinzelungseinrichtung gelangt, bevor diese von dem vorangegangenen Förderträger befreit wurde.

Die Kapazität einer solchen Hängeförderanlage ist allein deshalb begrenzt, weil immer nur ein Kleiderbügelhaken in jede Fördertasche eingehängt werden kann. Eine Kapazitätssteigerung ist nur durch Erhöhung der Fördergeschwindigkeit und/oder Verringerung des Abstandes zwischen den einzelnen Fördertaschen möglich. Der Fördergeschwindigkeit sind jedoch Grenzen gesetzt. Zur Übergabestelle gelangt der Förderträger nur aufgrund des Gravitationseinflusses, nachdem der Separierfinger diesen freigibt. Daraus folgt, daß die Zeit, die vom Zeitpunkt der Freigabe des Förderträgers bis zum Eintreffen an der Übergabestelle vergeht, abhängig ist, vom Gewicht des Förderträgers und von den Reibverhältnissen zwischen Bügelhaken und Gleitstange.

In der Bekleidungsindustrie werden Bügel mit Haken aus Metall oder aus Kunststoff verwendet. Der Querschnitt des Bügelhakens ist ebenfalls variabel. Aus Stabilitätsgründen kann ein Drahtbügel einen wesentliche geringeren Querschnitt aufweisen als ein Kunststoffbügel. Insbesondere Handelshäuser werden mit Kleidungsstücken aus aller Welt beliefert. Für Kleiderbügel gibt es keinen weltweiten Standard. Diese Unternehmen sind nun mit dem Problem konfrontiert, daß von ihnen jede nur denkbare Bügelform gehandhabt können werden muß. Zum Sortieren und Kommissionieren werden die unterschiedlichsten Kleidungsstücke (Mäntel, Kleider, Hosen, Jacken) in unterschiedlichen Konfektionsgrößen auf verschiedenen Arten von Kleiderbügel hängend der Hängeförderanlage zugeführt. Da die Kleidungsstücke ja noch unsortiert in die Hängeförderanlage eingegeben werden, ist die Zeitspanne, die vergeht, von der Vereinzelung bis zum Erreichen der Übergabestelle für jeden Förderträger unterschiedlich. Die Fördertasche muß also ausreichend langsam an der Übergabestelle vorbeigeführt werden, um sicherzustellen, daß sie auch einen Förderträger vorfindet, den sie übernehmen kann. Eine Erhöhung der Fördergeschwindigkeit über einen bestimmten Betrag hinaus birgt dann zum einen die Gefahr, daß einzelne Fördertaschen nicht beladen werden können, da noch kein Förderträger an der Übergabestelle vorhanden ist, andererseits aber auch die Gefahr, daß die Förderträger, die bei der Übergabe in die Fördertasche durch diese eine Beschleunigung erfahren, wenn sie zuvor an der Übergabestelle ruhten, sich aufschaukeln. Beim Aufschaukeln können die auf dem Kleiderbügel hängenden Kleidungsstücke herabfallen.

Durch eine geeignete Ansteuerung ist es möglich, den Übergabeförderer und den (Haupt-)Förderer der Hängeförderanlage zu synchronisieren. Da exakt errechnet werden kann, wann eine Fördertasche an der Übergabestelle sein wird, werden die einzelnen Förderträger auf dem Übergabeförderer entsprechend beschleunigt oder verzögert, um zur selben Zeit an der Übergabestelle einzutreffen. Eine Taktung bei der Übergabe entfällt, so daß ein kontinuierliches Einschleusen der Förderträger in den mit konstanter Geschwindigkeit umlaufenden Förderer möglich ist. Selbst ohne Steigerung der Fördergeschwindigkeit kann schon eine Steigerung der Kapazität erfolgen. Außerdem ist es möglich, dem Förderträger bei der Übergabe eine definierte Geschwindigkeit zu verleihen, so daß ein Aufschaukeln in der Fördertasche sicher vermieden wird.

Der Mindestabstand zwischen den Förderträgern, der von der Vereinzelungsvorrichtung eingestellt wird, tritt im Grunde genommen immer dann auf, wenn Förderträger derselben Gattung nacheinander in die Hängeförderanlage eingegeben werden sollen. Dann ist es notwendig, daß zwischen den einzelnen Förderträgern ausreichend Zeit verstreichen kann, bis die nächste Fördertasche an der Übergabestelle eintrifft, um eine Taktung des Übergabeförderers zu vermeiden. Stellt sich zwischen den einzelnen Förderträgern ein größerer Abstand als der Mindestabstand ein, was dann anzunehmen ist, wenn ein kleiner leichter Förderträger von einem großen schweren gefolgt wird, wird der Übergabeförderer nach der Übergabe des vorderen Förderträgers in die Fördertasche verlangsamt. Ist der Abstand zu dem nächsten Förderträger dann wieder geringer, erfolgt eine Beschleunigung des Übergabeförderers, nachdem der zweite Förderträger in die Fördertasche eingegeben worden ist.

Vorzugsweise wird von mehreren unterschiedlichen Stellen im Hängeförderer aus die notwendige Zeit bestimmt, bis die Fördertasche die Übergabestelle erreicht. Hierdurch wird die Taktzahl größer und dadurch die Zeittaktung kleiner, so daß die Genauigkeit des Meßergebnisses gesteigert wird.

Zur Erzeugung eines Taktes in der Hängeförderanlage werden regelmäßig wiederkehrende Punkte im umlaufenden Förderer detektiert. Hierzu werden beispielsweise die einzelnen endlos zusammengesetzten Förderelemente markiert, so daß sie über eine Lichtschranke oder ähnliches erkennbar sind. Je enger der Abstand zwischen den zu detektierenden regelmäßig vorhandenen Punkten ist, umso exakter ist die Zeitermittlung.

Durch den in der Hängeförderanlage selbst erzeugten regelmäßigen Takt kann die Länge einer Förderstrecke durch eine bestimmte Anzahl von Takten definiert werden. Die Anzahl ist dabei abhängig von dem Abstand der einzelnen an der Meßstelle detektierten umlaufenden Fixpunkte.

Der Erfindung liegt die Aufgabe zugrunde, für die eingangs erläuterte Hängeförderanlage eine Vorrichtung zum Vereinzeln von Förderträgern zu schaffen, mit der auf besonders einfache und wirkungsvolle Weise der Mindestabstand zwischen den Förderträgern eingestellt werden kann.

Die Lösung der Aufgabe erfolgt bei einer Vorrichtung zum Vereinzeln von Förderträgern mit einer drehbar angetriebenen Gewindespindel, deren Gewindesteigung in Förderrichtung anwächst, wobei die Gewindespindel in mehrere Bereiche unterschiedlicher Gewindesteigung aufgeteilt ist, dadurch, daß in jedem Bereich mindestens zwei verschiedene Gewindesteigungen vorgesehen sind, wobei bezogen auf die Förderrichtung die erste Gewindesteigung in jedem Bereich jeweils kleiner ist als die letzte im vorangegangenen Bereich, und wobei die Gewindenutbreite der Gewindespindel in Förderrichtung zunimmt.

Durch diese Ausbildung der Vereinzelungsvorrichtung werden Bügelhaken mit großem Querschnitt schnell nach vorne gefördert, da sie in die schmaleren Nuten nicht eintauchen können, sondern unmittelbar, durch die Schrägstellung der Vereinzelungsvorrichtung unterstützt, nach vorn transportiert werden, bis sie von der für sie passenden Nut erfaßt und dann über die hohe Steigung der Spindel rasch nach vorne gefördert werden, während die nachfolgenden kleineren Bügelhaken jede Nut durchlaufen. Die letzte Steigung bestimmt den Mindestabstand, der sich zwischen zwei Bügeln einstellt. Wird ein Förderträger mit einem kleinen Haken-querschnitt gefolgt von einem Förderträger mit einem großen Hakenquerschnitt, kann dieser den vorderen Bügel nicht überholen. Er wird folglich mit derselben Geschwindigkeit gefördert, wie der erste Förderträger, der jede Nut durchlaufen muß. Am Ende der Vereinzelungsvorrichtung wird sich folglich der Mindestabstand einstellen. Wird hingegen ein Förderträger mit größerem Hakenquerschnitt gefolgt von einem Förderträger mit kleinerem Hakenquerschnitt, wird der erste rasch nach vorn transportiert, während der kleinere eine längere Zeit benötigt. Zwischen den dann vereinzelten Förderträgern wird sich ein wesentlich größerer Abstand als der Mindestabstand einstellen.

Vorzugsweise wird die kleinere Steigung in jedem Bereich über mindestens zwei volle Umdrehungen vorgesehen.

Vorteilhaft ist es, wenn die Vorrichtung in Förderrichtung geneigt angeordnet ist. Die Schwerkraft unterstützt dann den Transport der Förderträger.

Eine besonders vorteilhafte Verwendung ergibt sich, wenn die Vorrichtung als Eingabevorrichtung für Fördergut in einen umlaufenden Hängeförderer verwendet wird. Dadurch wird die Vereinzelung und die Übergabe der Förderträger in den Hängeförderer auf eine einzige Vorrichtung konzentriert, so daß die Hängeförderanlage einfach und kostengünstig aufgebaut sein kann.

Mit Hilfe einer Zeichnung soll ein Ausführungsbeispiel der Erfindung nachfolgend näher erläutert werden. Es zeigt:
- Figur 1 -: die schematische Draufsicht auf eine Hängeförderanlage mit Übergabestelle,
- Figur 2 -: die schematische Darstellung der Übergabestelle in Seitenansicht,
- Figur 3 -: die Spindel der erfindungsgemäßen Vereinzelungsvorrichtung,
- Figur 3a -: den Übergabeförderer nach Figur 3 mit schematisierter Darstellung darauf angeordneter Förderträger mit unterschiedlichem Hakenquerschnitt.

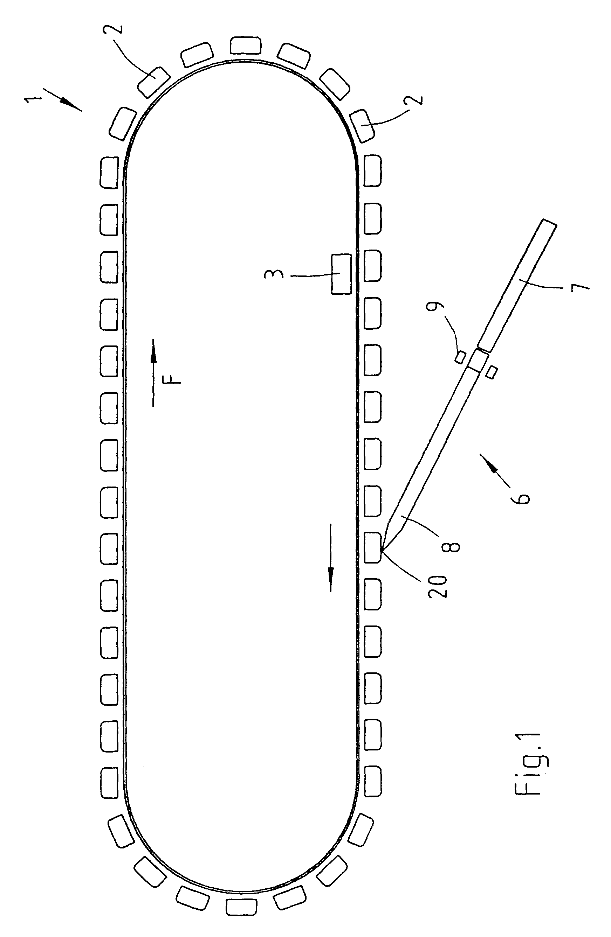

Wie Figur 1 schematisiert zeigt, besteht die Hängeförderanlage aus dem endlos umlaufenden Förderer 1, in den eine Vielzahl von Fördertaschen 2 in regelmäßigen Abständen eingehängt sind. Über die Eingabevorrichtung 6 werden die zu sortierenden und/oder zu kommissionierenden Förderträger 10 in den Förderer 1 eingegeben. Damit die Förderträger 10 sortiert werden können, ist der Förderer 1 mit einer Mehrzahl von hier nicht dargestellten Abgabestellen versehen, an der die Förderträger 10 dann wieder ausgeschleust werden können.

Der Förderer 1 läuft mit konstanter Geschwindigkeit in Förderrichtung F um. Vor der Übergabestelle 20 ist im Förderer 1 eine Meßeinrichtung 3 vorgesehen, die mit der Steuereinrichtung 11 in Wirkverbindung steht. Ebenfalls verbunden mit der Steuereinrichtung 11 sind die Lichtschranken 4 und 5, die im Förderstrang des Förderers 1 angeordnet sind und die Lichtschranke 9, die an der Eingabevorrichtung 6 vorgesehen ist.

Die Eingabevorrichtung 6 besteht aus der Vereinzelungsvorrichtung 7 und dem dieser nachgeschalteten Übergabeförderer 8. Sowohl die Vereinzelungsvorrichtung 7 als auch der Übergabeförderer 8 bestehen im wesentlichen aus einer angetriebenen Spindel, die die Haken der Förderträger 10 schlupffrei fördern können. Beide Spindeln 7, 8 werden von einem aus Gründen der Einfachheit hier nicht dargestellten Elektromotor angetrieben. Der Antriebsmotor des Übergabeförderers 8 ist ebenfalls mit der Steuereinrichtung 11 verbunden.

In der Meßeinrichtung 3 wird ein Takt erzeugt, in dem regelmäßig beabstandete Fixpunkte des Förderers 1 abgefragt und erfaßt werden. Beispielsweise kann über eine Lichtschranke die Fördertasche 2 erkannt werden. Denkbar ist auch, eine induktive Messung vorzunehmen, um markante Punkte, die regelmäßig im Förderer wiederkehren zu erfassen. Wichtig für die Taktung ist nur, daß die Punkte regelmäßig im Förderer vorhanden sind. Über die Länge der Meßeinrichtung 3 werden diese markanten Punkte mehrmals erfaßt, um die Taktrate entsprechend zu erhöhen und damit die Meßgenauigkeit zu steigern. Da die Wegstrecke von der Meßeinrichtung 3 bis zur Übergabestelle 20 festliegt, kann in der Steuereinrichtung 11 exakt die Zeit bestimmt werden die vergeht, bis eine bestimmte, die Meßeinrichtung 3 passierende Fördertasche 2 die Übergabestelle 20 erreicht. Bei konstanter Umlaufgeschwindigkeit des Förderers 1 wird also eine definierte Anzahl Takte gezählt werden können, bis die Fördertasche 2 die Übergabestelle 20 erreicht, wodurch der Zeitpunkt also exakt festliegt.

In der Eingabevorrichtung 6 wird von der Vereinzelungsvorrichtung 7 zwischen den ungeordnet ankommenden Förderträgern 10 ein Mindestabstand eingestellt und jeder Förderträger 10 über die Schräge 12 nach der Vereinzelung auf den Übergabeförderer 8 übergeben. Der Übergabezeitpunkt des Förderträgers 10 auf den Übergabeförderer 8 wird von der Lichtschranke 9 detektiert und der Steuereinrichtung 11 mitgeteilt. Vom Übergabeförderer 8 werden die Förderträger 10 dann an die Übergabestelle 20 gefördert, wo sie über die Schräge 13 in eine die Übergabestelle 20 passierende Fördertasche 2 gleiten.

Da der Antriebsmotor des Übergabeförderers 8 mit der Steuereinrichtung 11 verbunden ist, kann in der Steuereinrichtung 11 ermittelt werden, welche Zeit bei der aktuellen Drehzahl der Spindel vergeht, bis der von der Lichtschranke 9 detektierte Förderträger 10 die Übergabestelle 20 erreicht. Diese Zeit wird verglichen mit der Zeit, die vergeht, bis eine freie Fördertasche 2 an der Übergabestelle 20 eintrifft. In Abhängigkeit von dem Ergebnis dieses Vergleichs regelt die Steuereinrichtung 11 nun die Geschwindigkeit des Antriebsmotors für den Übergabeförderer 8 so ein, daß der Förderträger 10 zur selben Zeit an der Übergabestelle 20 eintrifft wie eine freie Fördertasche 2.

Um zu verhindern, daß zwei Förderträger 10 in eine Fördertasche 2 eingegeben werden, wird über die Lichtschranke 5 im Förderstrang des Förderers 1 ermittelt, ob die als nächstes die Meßeinrichtung 3 erreichende Fördertasche 2 bereits von einem Förderträger 10 belegt ist. Das Ergebnis wird ebenfalls an die Steuereinrichtung 11 übermittelt, so daß diese den Übergabeförderer 8 entsprechend regeln kann. Gegebenenfalls wird die Fördergeschwindigkeit so verringert, daß die belegte Fördertasche 2 die Übergabestelle 20 passieren kann und erst in die nächste freie Fördertasche der Förderträger 10 eingegeben wird.

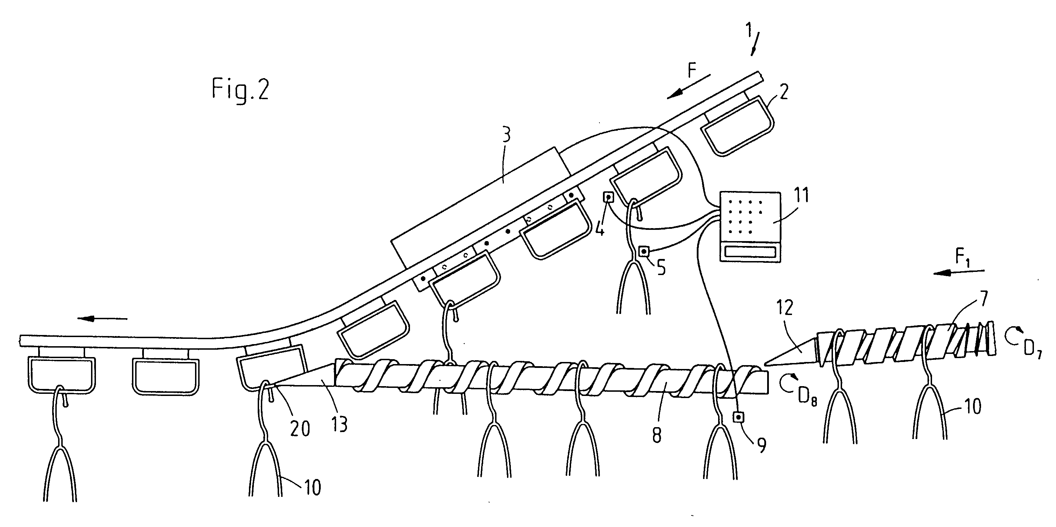

Um die Übergabe der Förderträger 10 in die Fördertasche 2 zu erleichtern, verläuft der Förderstrang des Förderers 1 mit Gefälle an der Übergabestelle 20 vorbei und geht dort dann in einen horizontalen Verlauf über, wie Figur 2 zeigt.

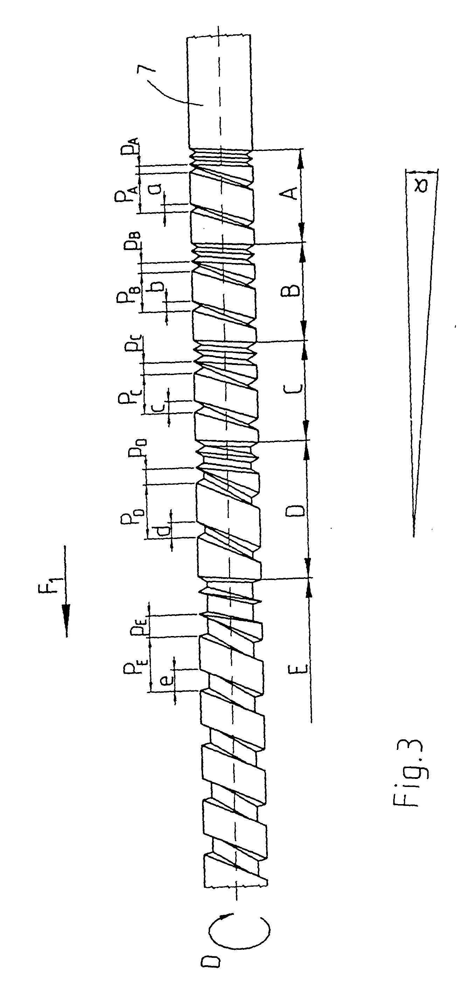

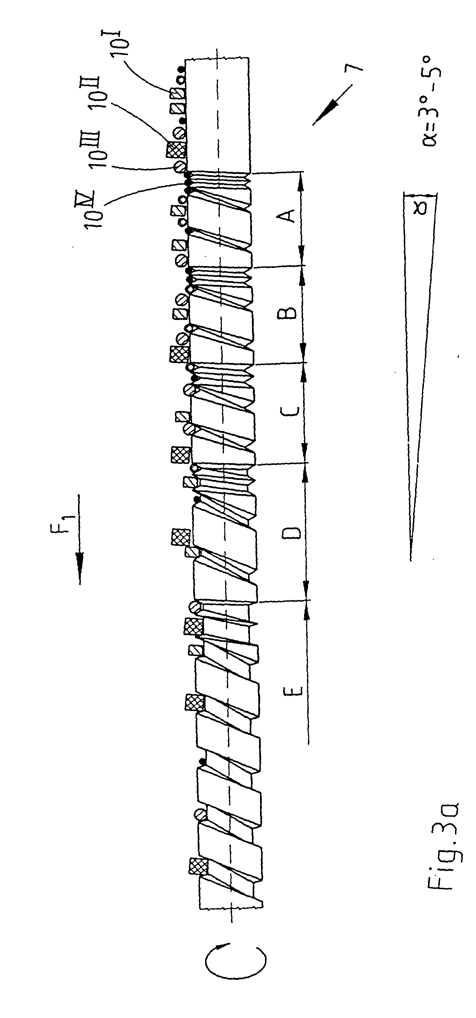

Figur 3 zeigt die Spindel des Übergabeförderers 8. In Förderrichtung F₁ ist die Spindel in einzelne Bereiche A, B, C, D, E unterteilt. In jedem Bereich A, B, C, D, E weist die Spindel zwei unterschiedliche Steigungen P, p auf. Bezogen auf die Förderrichtung F₁ schließt sich in jedem Bereich an die kleinere Steigung p die größere Steigung P an. Die Nutbreite a, b, c, d, e steigt in Förderrichtung F₁ ebenfalls in jedem Bereich A, B, C, D, E an. Vorzugsweise sind in jedem Bereich A, B, C, D, E jeweils zwei volle Umdrehungen auf der Spindel mit einer kleinen Steigung p_{A}, p_{B}, p_{C}, p_{D}, p_{E} vorgesehen und daran anschließend zwei volle Umdrehungen mit einer großen Steigung P_{A}, P_{B}, P_{C}, P_{D}, P_{E}. Die Steigung wächst in Förderrichtung F₁ an. Das heißt, die große Steigung P_{A} im Bereich A ist kleiner als die große Steigung P_{B} im Bereich B. Auch die kleinere Steigung p wächst in Förderrichtung F₁, so daß die kleine Steigung p_{A} im Bereich A kleiner ist als die kleine Steigung p_{B} im Bereich B. Die Nutbreite a im Bereich A entspricht vorzugsweise dem kleinsten Querschnitt des Hakens eines zu fördernden Förderträgers 10. Dadurch wird der kleinste Förderträger, der auf den Übergabeförderer 8 übergeben wird, gleich im Bereich A erfaßt und muß dann in Förderrichtung F₁ jede Fördernut durchlaufen. Haken größeren Querschnitts können nicht in die Nut a einfallen und werden durch die Reibkräfte weiter in Förderrichtung F₁ transportiert, bis sie in eine für sie ausreichend große Nut hineinfallen. Zur Unterstützung der Fortbewegung von Förderträgern 10 mit größerem Querschnitt des Hakens ist die Spindel des Übergabeförderers 8 in Förderrichtung F₁ abfallend angeordnet. Der Neigungswinkel α entspricht etwa 3 bis 5 Grad. Figur 3a verdeutlicht wie Förderträger 10 mit unterschiedlichem Haken-Querschnitt 10^{I}, 10^{II}, 10^{III}, 10^{IV} von den einzelnen Nuten der Spindel erfaßt werden. Im Bereich D wird deutlich, daß ein Förderträger 10 mit größerem Querschnitt seines Hakens einen Förderträger mit kleinerem Querschnitt nicht überholen kann.

Während die Vereinzelungsvorrichtung 7 in Förderrichtung F₁ mit einer ansteigenden Steigung versehen ist, weist die Spindel des Übergabeförderers 8 eine konstante Steigung auf, um immer einen reproduzierbaren Geschwindigkeitsverlauf zu haben.

### Bezugszeichenliste

- 1: Förderer
- 2: Fördertasche
- 3: Meßeinrichtung
- 4: Lichtschranke
- 5: Lichtschranke
- 6: Eingabevorrichtung
- 7: Vereinzelungsvorrichtung
- 8: Übergabeförderer
- 9: Lichtschranke
- 10: Förderträger
- 10^{I}: Hakenquerschnitt
- 10^{II}: Hakenquerschnitt
- 10^{III}: Hakenquerschnitt
- 10^{IV}: Hakenquerschnitt
- 11: Steuereinrichtung
- 12: Schräge
- 13: Schräge
- 20: Übergabestelle
- F: Förderrichtung
- F₁: Förderrichtung
- D₇: Drehrichtung der Vereinzelungsvorrichtung
- D₈: Drehrichtung des Übergabeförderers
- α: Neigungswinkel

## Patentansprüche

1. Vorrichtung zum Vereinzeln von Förderträgern (10) mit einer drehbar angetriebenen Gewindespindel, deren Gewindesteigung (P) in Förderrichtung (F₁) anwächst, wobei die Gewindespindel in mehrere Bereiche (A,B,C,D,E) unterschiedlicher Gewindesteigung (P) aufgeteilt ist, **dadurch gekennzeichnet, daß** in jedem Bereich (A,B,C,D,E) mindestens zwei unterschiedliche Gewindesteigungen (p,P) vorgesehen sind und bezogen auf die Förderrichtung (F₁) die erste Gewindesteigung (p_{B},p_{C},p_{D},p_{E}) in jedem Bereich (B,C,D,E) kleiner ist als die letzte (P_{A},P_{B},P_{C},P_{D}) im vorangegangenen Bereich (A,B,C,D), und dass die Gewindenutbreite (a,b,c,d,e) der Gewindespindel in Förderrichtung F₁) zunimmt.

2. Vorrichtung nach Anspruch 1, **dadurch gekennzeichnet, daß** die kleinere Gewindesteigung (p) in jedem Bereich (A,B,C,D,E) über mindestens zwei volle Umdrehungen vorgesehen ist.

3. Vorrichtung nach Anspruch 1, dadurch gekennzeichnet, daß die erste Gewindenutbreite (a) der Gewindespindel dem kleinsten Hakenquerschnitt eines vorgesehenen Förderträgers (10) entspricht.

4. Vorrichtung nach Anspruch 1, **gekennzeichnet durch** eine in Förderrichtung (F₁) geneigte Anordnung.

5. Vorrichtung nach einem oder mehreren der vorstehenden Ansprüche, **gekennzeichnet durch** die Verwendung als Eingabevorrichtung für Fördergut in einen umlaufenden Hängeförderer.

## Claims

1. A device for singling conveyor carriers (10) with a driven rotating threaded spindle, whose thread pitch (P) in the direction of conveying (F₁) increases, whereby the threaded spindle is divided into several regions (A, B, C, D, E) of different thread pitch (P), **characterised in that** in each region (A, B, C, D, E) at least two different thread pitches (p, P) are provided and that, in relation to the direction of conveying (F1), the first thread pitch (P_{B}, P_{C}, P_{D}, P_{E}) in each of the regions (B, C, D, E) is smaller than the last (P_{A}, P_{B}, P_{C}, P_{D}) in the foregoing region (A, B, C, D), and that the thread groove width (a, b, c, d, e) of the threaded spindle increases in the direction of conveying (F1).

2. A device according to claim 1, **characterised in that** the smaller thread pitch (p) in each region (A, B, C, D, E) is provided over at least two full turns.

3. A device according to claim 1, **characterised in that** the first thread groove width (a) of the threaded spindle corresponds to the smallest hook cross section of an intended conveyor carrier (10).

4. A device according to claim 1, **characterised by** an inclined arrangement in the direction of conveying (F1).

5. A device according to one or more of the foregoing claims, **characterised by** its use as an input device for goods to be conveyed on a circulating hanger conveyor.

## Revendications

1. Dispositif pour séparer des supports de convoyage (10), comprenant une vis entraînée en rotation, dont la pente de filetage (P) augmente dans la direction de convoyage (F₁), la vis étant subdivisée en plusieurs zones (A, B, C, D, E) avec des pentes de filetage différentes (P), caractérisé en ce qu'il est prévu dans chaque zone (A, B, C, D, E) au moins deux pentes de filetage différentes (p,P), et en ce que dans chaque zone (B, C, D, E) la première pente de filetage (P_{B}, P_{C}, P_{D}, P_{E}) par rapport à la direction de convoyage (F₁) est plus petite que la dernière (P_{A}, P_{B}, P_{C}, P_{D}) dans la zone précédente (A, B, C, D), et en ce que la largeur de creux de filet (a, b, c, d, e) de la vis augmente dans la direction de convoyage (F₁).

2. Dispositif selon la revendication 1, caractérisé en ce que la plus petite pente de filetage (p) de chaque zone (A, B, C, D, E) est prévue sur au moins deux tours complets.

3. Dispositif selon la revendication 1, caractérisé en ce que la première largeur de creux de filet (a) de la vis correspond à la plus petite section transversale du crochet d'un support de convoyage (10) prévu.

4. Dispositif selon la revendication 1, caractérisé par un agencement incliné dans la direction de convoyage (F₁).

5. Dispositif selon une ou plusieurs des revendications précédentes, caractérisé en ce qu'il est utilisé comme dispositif d'introduction pour un produit convoyé dans un convoyeur suspendu circulant.
